**Europäisches Patentamt**

**European Patent Office**

**Office européen des brevets**

(11) Publication number: **0 102 267**
**B1**

(12) **EUROPEAN PATENT SPECIFICATION**

(45) Date of publication of patent specification: **20.01.88**

(21) Application number: **83401503.4**

(22) Date of filing: **21.07.83**

(51) Int. Cl.⁴: **A 01 C 15/00**

(54) Implement for depositing an agricultural material in the soil.

(30) Priority: **21.07.82 ZA 825205**

(43) Date of publication of application:
**07.03.84 Bulletin 84/10**

(45) Publication of the grant of the patent:
**20.01.88 Bulletin 88/03**

(84) Designated Contracting States:
**AT BE CH DE FR GB IT LI LU NL SE**

(56) References cited:
**DE-U-1 998 708**
**FR-A- 951 823**
**FR-A-1 205 861**

(73) Proprietor: **Venter, Mathys Marthinus**
**Rhenosterpoort**
**Nylstroom Transvaal (ZA)**

(72) Inventor: **Venter, Mathys Marthinus**
**Rhenosterpoort**
**Nylstroom Transvaal (ZA)**

(74) Representative: **Hoisnard, Jean-Claude et al**
**Cabinet Beau de Lomenie 55, rue d'Amsterdam**
**F-75008 Paris (FR)**

Courier Press, Leamington Spa, England.

**Description**

This invention relates to an agricultural method and implement. More particularly the invention relates to a method and implement for depositing an agricultural material such as, for example, fertilizers, agricultural lime, etc., deep into the soil in which a particular crop is to be planted.

It is often, for various reasons, required to deposit a particular agricultural material at substantial depths below ground surface. Thus, for example, in a typically arid environment, it may be advisable to deposit a fertilizer or the like at such deep depths in order to compel the roots of a crop planted on the surface to penetrate deeply into the soil in order to develop a strong root system which will not only help to anchor the grown plant firmly but which will also ensure that the plant will be able to reach a low water table during draught conditions.

Another instance where such a deep depositing of agricultural material may be required is, for example, where there is an aluminium poisoned sand layer present immediately below the ground surface through which the roots of a crop planted on the surface have to penetrate in order to reach a water table located below the sand layer. In such instances it is necessary for agricultural lime to be deposited in the said sand layer to combat the poisonous effect of the aluminium compounds contained in it.

. Most of the hitherto known methods for such deep deposition of agricultural material entail the making of a deep groove or furrow in the soil, usually by means of a ripper tine or the like, and then merely causing the material to fall into the furrow under the influence of gravity. Such an arrangement is, for example, disclosed in FR—A—951 823.

One disadvantage found with such known methods is that the drawn furrow often closes up faster than what the material can be deposited in it with the result that such material is not laid down in the furrow at the intended depth.

This is especially the case where the material being deposited is relatively light such, as for example, when it comprises agricultural lime or the like.

Another disadvantage found with the known methods is that the material being deposited is laid down as a relatively narrow band in the bottom of the furrow while the ideal positioning would be as a wider band extending over at least a substantial part of the furrow in the vertical direction.

It has been suggested to deposit such material in such a furrow by means of a material conveying conduit extending to the bottom of the furrow and operated by compressed air or the like but, apart from the fact that the apparatus required for carrying out such an operation is relatively complicated and hence expensive, certain other problems relating, for example, to the relatively light weight of such material, have ensured that this type of operation has hitherto not found wide acceptance.

It is accordingly an object of this invention to provide a method and apparatus for depositing agricultural materials deep down below the soil surface with which the aforesaid problems will be overcome or at least minimised.

According to the invention a method for depositing an agricultural material in the soil below ground surface by means of an elongate, downwardly-extending counduit having at least one aperture at the rear side thereof towards its lower end and which is passed into a furrow or the like drawn in the soil; characterised in that the material is forced by means of a mechanically operated conveyor to pass down the conduit and out through the or each aperture onto a flat form located below the or each aperture which serves to scatter the material in the transverse direction in the furrow. With this arrangement the conduit may be so located in the furrow that the aperture is at the required depth at which the material has to be deposited in the furrow.

Further, by employing a conduit which includes a plurality of apertures spaced over its length, the material may be deposited as a wide band extending over a substantial part of the furrow in the vertical direction.

Preferably the method includes the steps of drawing a furrow in the soil by means of a ripper tine or the like, and passing the material depositing conduit into the furrow immediately behind the tine.

Preferably also the method includes the step of causing soil in the immediate vicinity of the furrow to pass into the furrow to cover the material as soon as the latter has been deposited in the furrow.

Further according to the invention an implement for depositing an agricultural material in soil below ground surface by means of an elongate downwardly-extending conduit adapted to pass into a furrow or the like drawn into the soil, the conduit having at least one aperture at the rear side thereof towards its lower end; and a mechanically operated conveyor for forcing such material to pass down the conduit and out through the or each aperture into the furrow by falling onto a transversely extending platform located below the at least one aperture and be scattered in the transverse direction in the furrow.

Still further according to the invention the conduit includes a plurality of apertures and platforms spaced axially over its length.

Preferably the apertures are arranged in two parallel extending rows, the apertures in each row increasing in size from the top aperture towards the bottom aperture.

These platforms serve to scatter material falling from an aperture onto them in the horizontal direction so enlarging the transverse width of the band of material which is deposited in the furrow.

Further according to the invention the means for forcing the material down the conduit comprises an elongated worm gear which is rotatably contained in the bore of the conduit.

With this arrangement material passing into the upper end of the conduit is carried by the threads of the worm gear towards the lower end of the conduit. As such material reaches an aperture in the conduit, the material is forced out through such aperture into the furrow.

The worm gear may be driven in any suitable manner.

Preferably the worm gear is driven through the rotation of a land engageable wheel associated with the implement.

Such rotation may, for example, be effected through a chain extending between a sprocket on such a wheel and a sprocket mounted on a shaft which is rotatably connected to the worm gear.

If required, the land engageable wheel may be biased towards continuous engagement with the ground surface.

Such biasing means may, for example, comprise a suitable spring or the like extending between the wheel, or its mounting, and the implement.

In another form of the invention the conduit's material conveying means comprises a device adapted to cause a vibration in the conduit sufficient to cause the material to pass down the conduit.

Further according to the invention the implement may include a container in which the material to be fed into the furrow is held, and into which the upper end of the conduit passes.

Still further according to the invention the implement includes a ripper tine adapted to draw a furrow in the soil, the said conduit being mounted in close trailing relationship relative to the tine with the lower end of the conduit being located at substantially the same level as the lower end of the tine.

With this arrangement the material may be deposited in the furrow immediately behind the tine and hence before any significant amount of soil from the furrow surroundings can start to fall into the furrow.

Preferably the lower end of the worm gear extends a small distance beyond the lower end of the conduit.

Such an arrangement helps to prevent the conduit from becoming clogged up with material.

Further according to the invention the implement includes a furrow closing member which is mounted on the implement in trailing relationship to the conduit.

The furrow closing member preferably includes an elongated element adapted to pass into the furrow and one or more projections extending transversely the element which are adapted to rake soil from the sides of the furrow into the furrow as the element moves along the furrow.

If required, the implement may also include a compacting wheel in trailing relationship to the furrow closing member, the wheel being adapted to press the soil, which has been racked back into the furrow by the said member, firmly down into the furrow.

Further according to the invention the implement includes a frame on which the various aforesaid components are mounted and which can be drawn by a tractor or the like.

Preferably the frame is adapted to be coupled to the three point hitching mechanism of a tractor or the like.

The invention will now be described further by way of example with reference to the enclosed drawings wherein:

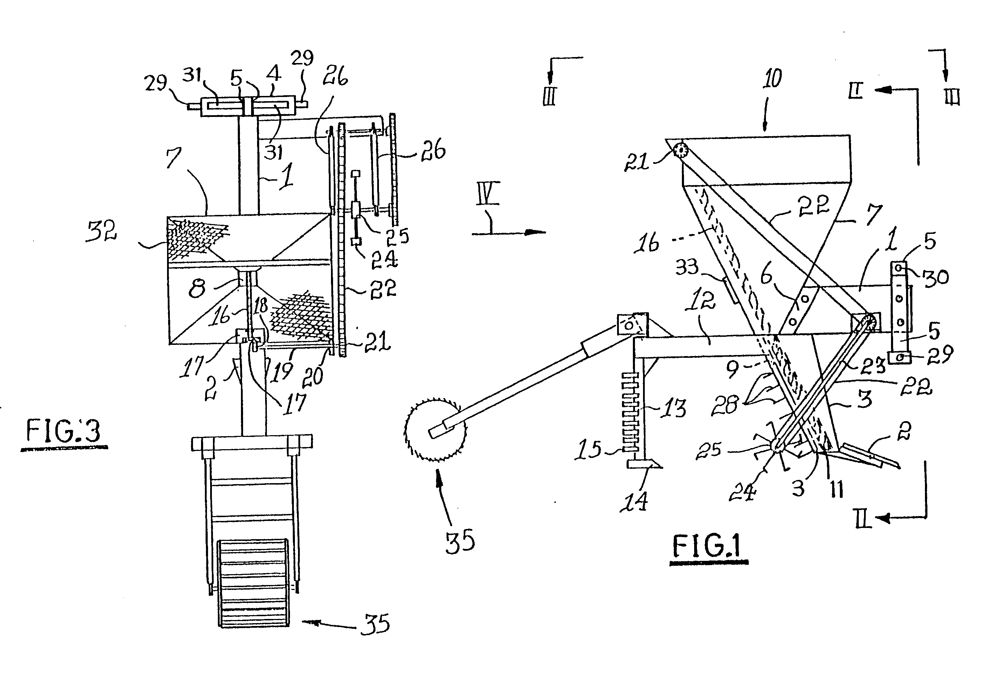

Figure 1 is a diagrammatic side view of one embodiment of an implement according to the invention;

Figure 2 is a front view of the apparatus shown in Figure 1 as seen in the direction of arrows II in Figure 1;

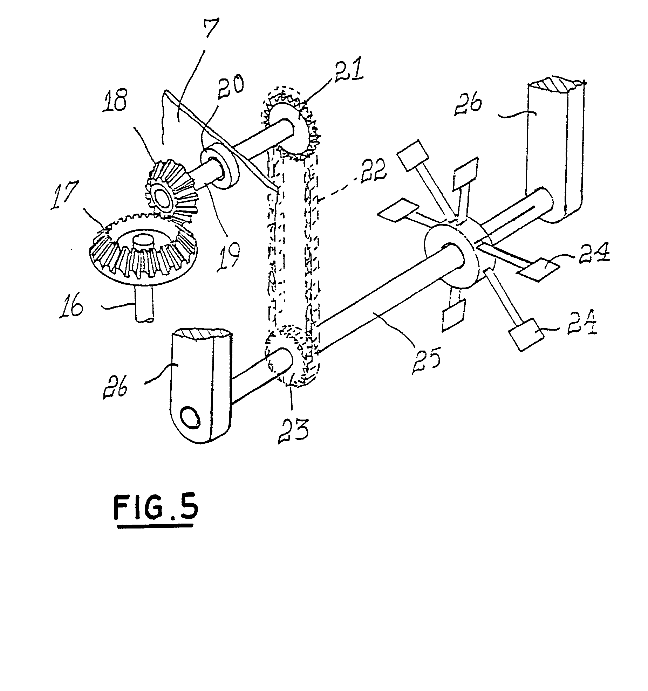

Figure 3 is a plan view of the apparatus of Figures 1 and 2 as seen in the direction of arrows III in Figure 1;

Figure 4 is a rear view of the apparatus shown in the previous figures as seen in the direction of arrows IV in Figure 1; and

Figure 5 is a diagrammatic perspective view showing part of the apparatus of the previous figures in more detail.

In this embodiment of the invention the implement includes a metal frame which is defined by a horizontally extending beam 1 of which the one end is connected to a ripper tine 2 by means of a vertically extending beam 3. The other end of beam 1 is connected to a horizontally extending beam 4 and a pair of vertically extending interconnected beams 5 are mounted on its centre.

A frame assembly 6, mounted on beam 1, seves to support a container 7 of which the inside tapers towards a substantially centrally located outlet aperture 8 which is located in the bottom of container 7 and into which the upper end of an elongated conduit 9 extends from below.

The material intended to be deposited in the soil by the implement is introduced to container 7 through the open end 10 thereof.

Conduit 9, of which the lower end extends to substantially the same level as the tip of tine 2, is connected by means of a substantially triangularly shaped plate 11 to the rear end of beam 3. Plate 11 is also connected to a horizontally extending elongated beam 12 which, in turn, has its one end connected to beam 1. The other end of beam 12 is connected to a vertically extending elongated member 13 which includes a scoop 14 towards its lower end and which is provided over its length with a plurality of transversely extending raking elements 15. Member 13 is located substantially in linear trailing relationship relative to beam 3.

An elongated worm gear 16 is rotatably received in the bore of conduit 9. The lower end of worm gear 16 extends a short distance beyond the lower end of conduit 9 while the upper end of worm gear 16 extends a substantial distance into the interior of container 7.

Worm gear 16 includes towards its upper end a bevelled gear 17 which merges with another bevelled gear 18 which is carried on a shaft 19 which is rotatably received in a bearing 20 mounted on the side wall of container 7. A sprocket 21 which is connected to the free end of shaft 19 is rotatably linked by means of a chain 22 to a sprocket 23 which is carried on the shaft 25 on which a land engageable wheel 24 is mounted.

Shaft 25 is rotatably received between the two ends of arms 26 of which the other ends are secured to the main frame of the implement.

Wheel 24 is so mounted that it runs on one side of the implement.

Conduit 9 is provided along its rear end with two parallel spaced rows of apertures 27 which increase in size from the top apertures towards the bottom apertures.

Each aperture 27 is associated with a transversely extending projection 28 which is located immediately below the aperture and which defines a platform onto which material passing from inside conduit 9 via an aperture 27 can fall.

Beam 4 is provided at each of its opposite ends with a pin 29 which, together with a pair of aligned apertures 30 in the upper end of beams 5, serves as the connecting means for coupling the implement to the three-point hitching mechanism of a tractor or the like (not shown).

Studs 31 serve to re-inforce the connection of beams 4 and 5 to one another.

A wire mesh 32, which is provided over the open end 10 of container 7, ensures that only material smaller than a particular particle size can pass into container 7.

A lid 33, provided in the rear side wall container 7 allows access to the inside of container of 7 for inspection purposes.

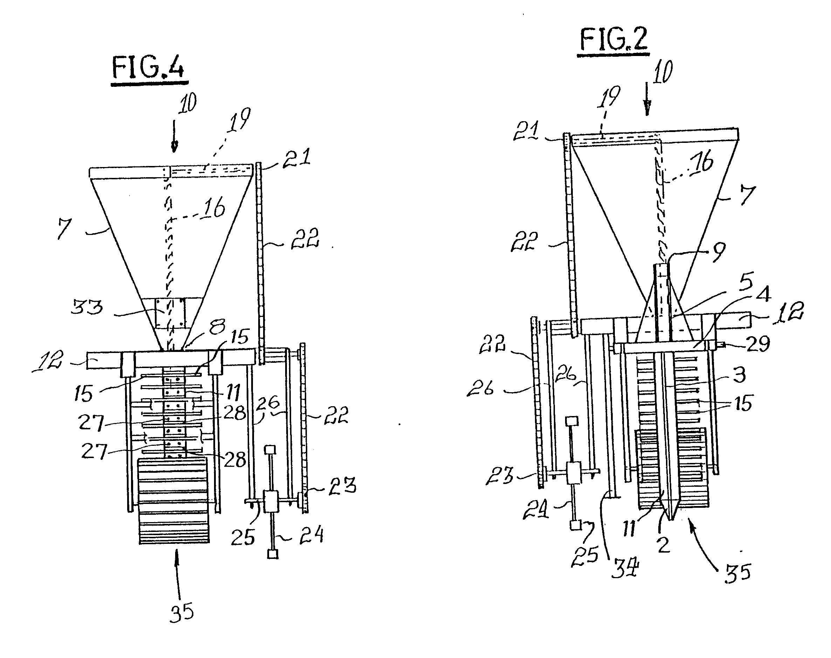

A pair of removable legs 34 (Fig. 2) serves to support the implement in the upright position when it is not in use.

In use, container 7 is filled with the particular material to be deposited in the soil; the implement hitched to the rear end of a tractor or the like: and legs 34 removed.

When the implement is located in the particular area where the material has to be deposited in the soil, the tractor's hitch mechanism is operated to cause tine 2 and wheel 24 to engage the soil surface. When the implement is then drawn over the surface, tine 2 penetrates the soils to draw a deep groove or furrow into the it. At the same time, because of the rotational engagement between wheel 24 and the ground surface, shaft 19, and hence worm gear 16, is rotated.

The screw threads on worm gear 16 carry the material located in container 7 through outlet 8 into the bore of conduit 9. Any of such material passing over an aperture 27 in conduit 9, is forced out through it to fall onto its associated platform 28 which serves to scatter such material in the horizontal direction.

The material is accordingly deposited in the furrow in a relatively wide band which extends substantially from the upper end of the furrow vertically downward to the bottom end of the furrow.

Trailing member 13 with its scoop 14 and rake elements 15 immediately draws soil located in the immediate vicinity of the furrow into the furrow to cover the deposited material.

If required, a compacting wheel 35 located in linear trailing relationship to member 13 may be provided for pressing down firmly the raked back soil in the furrow.

Applicant has found that it is possible with the implement to deposit agricultural material to a depth in the order of 900 mm below ground surface. The applicant has furthermore found that a crop raised under severe draught conditions in soil treated with, say, a particular fertilizer by means of the implement according to the invention, was substantially better than a crop raised under similar conditions but with the fertilizer being deposited in the soil in the conventional manner.

It will be appreciated that the rate at which a particular material may be deposited in the soil can be changed by varying the speed of rotation of worm gear 16 and/or the sizes of apertures 27.

It will be appreciated further that there are many variations in detail possible with a method and apparatus according to the invention without departing from the scope of the appended claims.

Thus, for example, instead of driving worm gear 16 by means of ground engageable wheel 24, a motor may be utilised for this purpose. Also, if required, the concentration of the deposited material in any particular zone in the furrow may be varied by changing the size of the apertures 27 in conduit 9 in such zone. It will also be appreciated that instead of being a solid, the material deposited may also be in liquid form.

### Claims

1. A method of depositing an agricultural material in soil below ground surface by means of an elongate, downwardly-extending conduit (9) which has at least one aperture (27) at the rear side thereof towards its lower end and which is passed into a furrow or the like drawn in the soil; characterised in that the material is forced by means of a mechanically operated conveyer (16) to pass down the conduit (9) and out through the or each aperture (27) onto a platform (28) located below the or each aperture (27) which serves to scatter the material in the transverse direction in the furrow.

2. The method of claim 1 characterised in that the conduit (9) includes a plurality of apertures (27) and platforms (28) so spaced over the length of conduit (9) that the material is deposited as a wide band extending over a substantial part of the furrow in the vertical direction.

3. The method of claims 1 or 2 characterised in that it includes the further steps of drawing a furrow in the soil by means of a ripper tine (2) or the like, and passing the material depositing conduit (9) into the furrow immediately behind the tine (2).

4. The method of any one of the preceding claims characterised in that it includes the further step of causing soil from the sides of the furrow to pass into the furrow in order to mix with and to cover the material as soon as the latter has been deposited in the furrow.

5. An implement for depositing an agricultural material or the like in soil below ground surface by means of an elongate downwardly-extending conduit (9) which has at least one aperture (27) at the rear side thereof towards its lower end, the conduit (9) being adapted to pass into a furrow or the like drawn into the soil, characterised in that the implement includes a mechanically operated conveyer (16) for forcing the material down the conduit (9) and out through the or each aperture (27) so that the material can fall onto a transversely extending platform (28) located below the at least one aperture and be scattered in the transverse direction in the furrow.

6. The implement of claim 5 characterised in that the conduit (9) includes a plurality of apertures (27) and platforms (28) spaced axially over its length.

7. The implement of claim 6 wherein the apertures (27) are arranged in two parallel extending rows, the apertures (27) in each row increasing in size from the top apertures (27) towards the bottom aperture (27).

8. The implement of any one of claims 5 to 7 characterised in that the mechanically operated conveyer (16) for forcing the material down the conduit (9) comprises an elongated worm gear (16) which is rotatably contained within the bore of the conduit (9).

9. The implement of claim 8 characterised in that the conveyer in the form of a worm gear (16) is driven through the rotation of a land engageable wheel (24) associated with the implement.

10. The implement of claim 9 characterised in that the rotation is effected through a chain (22) extending between a sprocket (23) on such a wheel and a sprocket (21) mounted on a shaft (19) which is rotatably connected to the worm gear (16).

11. The implement of claims 9 or 10 characterised in that the land engageable wheel (24) is biased towards continuous engagement with the ground surface.

12. The implement of claim 11 characterised in that the biasing means comprises a suitable spring or the like extending between the wheel (24), or its mounting, and the implement.

13. The implement of any one of claims 5 to 7 characterised in that the mechanically operated means (16) for conveying the material down the conduit comprises a vibrator adapted to cause a vibration in the conduit (9) in the transverse direction.

14. The implement of any one of claims 5 to 13 characterised in that the implement includes a container (7) in which the material to be fed into the furrow is held and into which the upper end of the conduit (9) extends so that material can pass from the container (7) into the conduit (9).

15. The implement of any one of claims 5 to 14 characterised in that it includes a ripper tine (2) adapted to draw a furrow in the soil and that the said conduit (9) is mounted in close trailing relationship relative to the tine (2) with the lower end of the conduit (9) being located at substantially the same level as the lower end of the tine (2).

16. The implement of any one of claims 5 to 15 characterised in that it includes a furrow closing member (13) which is mounted on the implement in trailing relationship to the conduit (9).

17. The implement of claim 16 characterized in that the furrow closing member (13) includes an elongated element adapted to be drawn along the drawn furrow, the element including one or more projections (15) extending transversely the element and which are adapted to rake soil into the furrow while the element is drawn along the furrow.

18. The implement of any one of claims 16 or 17 characterised in that it includes a compacting wheel (35) in trailing relationship relative to the furrow closing member (13), the wheel (35) being adapted to press the soil which has been raked back into the furrow by the said member (13) and the material which has been deposited in the furrow firmly down in the furrow.

19. The implement of any one of claims 5 to 18 characterised in that it includes a frame (1, 3) on which the various aforesaid components are mounted and which is adapted to be coupled to the three point hitch of a tractor or the like.

**Patentansprüche**

1. Verfahren zum Ablegen eines landwirtschaftlichen Materials in den Erdboden unterhalb der Erdoberfläche mittels eines länglichen, sich nach unten erstreckenden Rohrs (9), das zumindest ein Loch (27) an seiner Rückseite zu seinem unteren Ende hin aufweist und das in eine in den Erdboden gezogene Furche od. dgl. eingebracht wird, dadurch gekennzeichnet, daß das Material mittels eines mechanisch betriebenen Förderers (16) das Rohr (9) hinunter und durch das oder jedes Loch (27) auf eine unter dem oder jedem Loch (27) befindliche Plattform (28) hinausgedrückt wird, welche dazu dient, das Material in der Furche in Querrichtung zu verstreuen.

2. Verfahren nach Anspruch 1, dadurch gekennzeichnet, daß das Rohr (9) eine Mehrzahl von Löchern (27) und Plattformen (28) enthält, die so über die Länge des Rohres (9) im Abstand angeordnet sind, daß das Material als breites, sich über einen wesentlichen Teil der Furche in vertikaler Richtung erstreckendes Band abgelegt wird.

3. Verfahren nach Anspruch 1 oder 2, dadurch gekennzeichnet, daß es weiters den Schritt des Ziehens einer Furche in den Erdboden mittels einer Aufreißzinke (2) od. dgl. und Einleiten des Materialablegerohrs (9) in die Furche unmittelbar hinter der Zinke (2) umfaßt.

4. Verfahren nach einem der vorhergehenden Ansprüche, dadurch gekennzeichnet, daß es weiters den Schritt umfaßt, Erde von den Seiten der Furche in die Furche zu drücken, damit sich diese mit dem Material vermischt bzw. dieses bedeckt, sobald letzteres in der Furche abgelegt worden ist.

5. Gerät zum Ablegen eines landwirtschaftlichen Materials od. dgl. in den Erdboden unter der Erdoberfläche mittels eines länglichen, sich nach unten erstreckenden Rohrs (9), das zumindest ein Loch (27) an seiner Rückseite zu seinem unteren Ende hin aufweist, wobei das Rohr (9) in eine in den Erdboden gezogene Furche od. dgl. einbringbar ist, dadurch gekennzeichnet, daß das Gerät einen mechanisch betriebenen Förderer (16) zum Drücken des Materials das Rohr (9) hinunter und das oder jedes Loch (27) hinaus enthält, sodaß das Material auf eine unterhalb des mindestens einen Lochs befindliche, querverlaufende Plattform (28) fallen und in der Furche in Querrichtung verstreut werden kann.

6. Gerät nach Anspruch 5, dadurch gekennzeichnet, daß das Rohr (9) eine Mehrzahl von Löchern (27) und Plattformen (28) enthält, die über seine Länge axial im Abstand angeordnet sind.

7. Gerät nach Anspruch 6, worin die Löcher in zwei parallellaufenden Reihen angeordnet sind, wobei die Löcher (27) in jeder Reihe von den obersten Löchern (27) zum Bodenloch (27) hin in der Größe zunehmen.

8. Gerät nach einem der Ansprüche 5 bis 7, dadurch gekennzeichnet, daß der mechanisch betriebene Förderer (16) zum Hinunterdrücken des Materials entlang des Rohrs (9) einen länglichen Schneckenantrieb (16) umfaßt, der drehbar in der Bohrung des Rohrs (9) enthalten ist.

9. Gerät nach Anspruch 8, dadurch gekennzeichnet, daß der Förderer in Form eines Schneckenantriebs (16) durch Rotation eines im Acker eingreifenden, mit dem Gerät verbundenen Rads (24) betrieben ist.

10. Gerät nach Anspruch 9, dadurch gekennzeichnet, daß die Rotation durch eine Kette (22) bewirkt wird, die zwischen einem Zahn (23) auf einem solchen Rad und einem Zahn (21), der auf einer mit dem Scheckenantrieb (16) drehbar verbundenen Welle (19) montiert ist, verläuft.

11. Gerät nach Anspruch 9 oder 10, dadurch gekennzeichnet, daß das im Acker eingreifende Rad (24) zum permanenten Eingriff in der Erdoberfläche vorgespannt ist.

12. Gerät nach Anspruch 11, dadurch gekennzeichnet, daß das Vorspannungsmittel eine geeignete Feder od. dgl. umfaßt, die sich zwischen dem Rad (24) oder seiner Befestigung und dem Gerät erstreckt.

13. Gerät nach einem der Ansprüche 5 bis 7, dadurch gekennzeichnet, daß das mechanisch betriebene Mittel (16) zum Fördern des Materials das Rohr hinunter einen Vibrator zum Versetzen des Rohrs (9) in Vibration in Querrichtung umfaßt.

14. Gerät nach einem der Ansprüche 5 bis 13, dadurch gekennzeichnet, daß das Gerät einen Behälter (7) enthält, in welchem das in die Furche einzubringende Material gehalten ist und in den das oberen Ende des Rohrs (9) reicht, sodaß Material vom Behälter (7) in das Rohr (9) gelangen kann.

15. Gerät nach einem der Ansprüche 5 bis 14, dadurch gekennzeichnet, daß es eine Aufreißzinke (2) zum Ziehen einer Furche in den Erdboden enthält, und daß das Rohr (9) in bezug auf die Zinke (2) in Folgestellung knapp hinter ihr montiert ist, wobei sich das untere Ende des Rohrs (9) im wesentlichen im gleichen Niveau wie das untere Ende der Zinke (2) befindet.

16. Gerät nach einem der Ansprüche 5 bis 15, dadurch gekennzeichnet, daß es ein Furchenschließorgan (13) enthält, welches in bezug auf das Rohr (9) in Folgestellung am Gerät montiert ist.

17. Gerät nach Anspruch 16, dadurch gekennzeichnet, daß das Furchenschließorgan (13) ein längliches Element zum Ziehen entlang der gezogenen Furche enthält, welches Element einen oder mehrere quer zum Element verlaufende Vorsprünge (15) zum Einrechen von Erde in die Furche, während das Element entlang der Furche gezogen wird, enthält.

18. Gerät nach einem der Ansprüche 16 oder 17, dadurch gekennzeichnet, daß es ein Verdichtrad (35) in Folgestellung in bezug auf das Furchenschließorgan (13) enthält, wobei das Rad (35) die von diesem Organ (13) in die Furche zurückgerechte Erde und das in die Furche abgelegte Material fest in die Furche pressen kann.

19. Gerät nach einem der Ansprüche 5 bis 18, dadurch gekennzeichnet, daß es einen Rahmen (1, 3) enthält, auf dem die verschiedenen vorgenannten Komponenten montiert sind und der an die Dreipunktkupplung eines Traktors od. dgl. ankuppelbar ist.

**Revendications**

1. Procédé pour enfouir un produit agricole dans la terre à l'aide d'un conduit (9) de forme allongée, qui s'étend vers le bas et possède au moins un orifice (27) sur son côté arrière, près de son extrémité inférieure, et que l'on fait passer dans un sillon ou une rigole semblable tracée dans la terre, caractérisé en ce que, au moyen d'un organe de transport (16) actionné mécaniquement, on force le produit de descendre à travers le conduit (9) et d'en sortir à travers l'orifice ou chaque orifice (27), d'où il arrive sur une palatte de distribution (28) située sous l'orifice ou sous chaque orifice (27) et qui sert à répartir le produit en direction transversale dans le sillon.

2. Procédé selon la revendication 1, caractérisé en ce que le conduit (9) possède plusieurs orifices (27) et plusieurs palettes de distribution (28), que l'on a mutuellement espacés sur la longueur du conduit (9), de manière que le produit soit déposé sous forme d'une large bande s'étendant sur une partie substantielle du sillon dans le sens vertical.

3. Procédé selon la revendication 1 ou 2, caractérisé en ce qu'il comprend, en outre, les opérations consistant à tracer un sillon dans la terre au moyen d'une dent de scarificateur (2) ou d'un élément semblable, et à faire passer le conduit (9) dans le sillon immédiatement derrière la dent (2).

4. Procédé selon l'une quelconque des revendications précédentes, caractérisé en ce qu'il comprend, en outre, l'opération consistant à faire passer de la terre des flancs du sillon dans celui-ci pour se mélanger avec et pour recouvrir le produit dès que ce dernier a été déposé dans le sillon.

5. Instrument pour enfouir un produit agricole ou analogue dans la terre à l'aide d'un conduit (9) de forme allongée, qui s'étend vers le bas et possède au moins un orifice (27) à son côté arrière, près de son extrémité inférieure, le conduit (9) étant agencé pour passer dans un sillon ou une rigole semblable tracée dans la terre, caractérisé en ce qu'il comprend un organe de transport (16), actionné mécaniquement, pour forcer le produit de descendre à travers le conduit (9) et d'en sortir par l'orifice ou par chaque orifice (27), de manière que le produit puisse tomber sur une palette (28), située sous l'orifice ou sous chaque orifice et s'étendant transversalement et que le produit puisse être réparti par cette palette dans la direction transversale dans le sillon.

6. Instrument selon la revendication 5, caractérisé en ce que le conduit (9) comporte plusieurs orifices (27) et plusieurs palettes (28) mutuellement espacés axialement sur la longueur du conduit.

7. Instrument selon la revendication 6, caractérisé en ce que les orifices (27) sont disposés en deux rangées parallèles, les orifices (27) de chaque rangée augmentant en grandeur de l'orifice (27) le plus haut vers l'orifice (27) le plus bas.

8. Instrument selon l'une quelconque des revendications 5 à 7, caractérisé en ce que l'organe de transport (16), actionné mécaniquement et destiné à forcer le produit de descendre à travers le conduit (9), est constitué par une vis sans fin (16) de forme allongée, qui est montée rotative dans le conduit (9).

9. Instrument selon la revendication 8, caractérisé en ce que l'organe de transport sous forme d'une vis sans fin (16) est entraîné par la rotation d'une roue (24) roulant sur le sol et combinée à l'instrument.

10. Instrument selon la revendication 9, caractérisé en ce que la rotation de la vis sans fin est produite par l'intermédiaire d'une chaîne (22) s'étendant entre une roue à chaîne (23) prévue sur ladite roue roulant sur le sol et une roue à chaîne (21) calée sur un arbre (19) faisant tourner la vis sans fin (16).

11. Instrument selon la revendication 9 ou 10, caractérisé en ce que la roue (24) roulant sur le sol est chargée élastiquement pour rester en permanence en contact avec la surface du sol.

12. Instrument selon la revendication 11, caractérisé en ce que le dispositif pour charger la roue est constitué par un ressort adéquat ou par un élément semblable prévu entre la roue (24) ou sa monture et l'instrument.

13. Instrument selon l'une quelconque des revendications 5 à 7, caractérisé en ce que l'organe (16), actionné mécaniquement pour transporter le produit vers le bas à travers le conduit, est constitué par un vibreur conçu pour produire une vibration transversale dans le conduit (9).

14. Instrument selon l'une quelconque des revendications 5 à 13, caractérisé en ce qu'il comprend un récipient (7) dans lequel est maintenu le produit à introduire dans le sillon et dans lequel s'étend l'extrémité supérieure du conduit (9), de sorte que le produit peut passer du récipient (7) dans le conduit (9).

15. Instrument selon l'une quelconque des revendications 5 à 14, caractérisé en ce qu'il comprend une dent de scarificateur (2) conçue pour tracer un sillon dans la terre et que le conduit (9) est monté à faible distance derrière la dent (2), l'extrémité inférieure du conduit (9) étant située sensiblement au même niveau que l'extrémité inférieure de la dent (2).

16. Instrument selon l'une quelconque des revendications 5 à 15, caractérisé en ce qu'il comprend en outre un outil (13) pour refermer le sillon, qui est monté sur l'instrument derrière le conduit (9).

17. Instrument selon la revendication 16, caractérisé en ce que l'outil (13) pour refermer le sillon comporte un élément de forme allongée, conçu pour être tiré le long du sillon tracé, élément qui porte un ou plusieurs saillies (15) s'étendant transversalement à l'élément et qui sont conçues pour ratisser et faire tomber de la terre dans le sillon pendant que l'élément est tiré le long du sillon.

18. Instrument selon la revendication 16 ou 17, caractérisé en ce qu'il comprend une roue de tassement (35) prévue à l'arrière de l'outil (13) pour refermer le sillon, cette roue (35) étant conçue pour comprimer la terre qui a été ramenée dans le sillon par ledit outil (13), ainsi que le produit qui a été déposé dans le sillon, de manière que la terre et ce produit soient enfoncés avec force dans le sillon.

19. Instrument selon l'une quelconque des revendications 5 à 18, caractérisé en ce qu'il comprend un bâti (1, 3) sur lequel sont montés les différents composants mentionnés et qui est conçu pour être attaché à l'attelage à trois points d'un tracteur ou d'un véhicule semblable.

FIG.1

FIG.3

FIG.4

FIG.2

0 102 267

**FIG.5**